# EUROPEAN PATENT APPLICATION

(11) **EP 2 302 090 A1**
(43) Date of publication of application: **30.03.2011**
(21) Application number: 09171546.6
(22) Date of filing: 28.09.2009
(51) Int. Cl.: C22C 38/10, F16J 15/28, C21D 9/00

(54) **Stuffing box casing for reciprocating compressors comprising at least in part a steel containing C: 0.13-0.17%; Cr:1.8-2.20%; Ni: 9.5-10.5%; Co:13.5-14.5%; Mo:0.90-1.10; Al<0.015%; Ti<0.015%;Mn<0.10%; Si<0.10%; S<0.005%; P<0.008%.**

(71) Applicant: Nuovo Pignone S.p.A., 50127 Florence (IT)
(72) Inventor: Campo, Nicola, 50127 Firenze (IT); Chiesi, Francesco, 50127 Firenze (IT); Bellacci, Michelangelo, 50127 Firenze (IT); Giannozzi, Massimo, 50127 Firenze (IT)
(74) Representative: Illingworth-Law, William Illingworth

(57) **Abstract**

A stuffing box casing (22) for a cylinder (10) of a reciprocating compressor comprises a first outer disc (28) and a second inner disc (30), concentric with respect to the outer disc (28) and therewithin a seat for at least a piston (10) sealing element is formed. At least a part of the stuffing box casing (22) is made of a high strength metal alloy material, prepared by a process comprising a melting step, a following plastic deforming step and a final thermal processing step for improving the stuffing box casing (22) mechanical properties.

## Description

### BACKGROUND OF THE INVENTION

The present invention relates to a stuffing box casing for a reciprocating compressor adapted to be used, particularly though not exclusively, in high pressure compressors, (the so called "hypercompressors"), for making ethylene polymers and copolymers.

As is known, a compressor is a machine for increasing, by using mechanical power, the pressure of a compressible (gas) fluid. In reciprocating compressors, the fluid is compressed by one or more movable pistons each of which is reciprocatedly driven in a respective cylinder. The fluid to be compressed is drawn into the cylinder through one or more suction ducts, and the compressed fluid is ejected from the cylinder through one or more delivery ducts. The piston or pistons of a reciprocating compressor are usually driven either by an electric motors or by an internal combustion engine, through a driving crankshaft and a per se known connecting rod-crank mechanism.

Reciprocating compressors operating in polymer and copolymer making systems, for example for making low density poly-ethylene (LDPE), or ethyl-vinylacetate (EVA), are subjected to a very high fatigue stress. For example, the second stage of a hypercompressor for making polymers and copolymers may compress the gas (gaseous ethylene) to a pressure greater than 3500 bars. Thus, because of these very high operating pressures and pressure fluctuations between the suction and delivery ducts, the cylinder of a reciprocating hypercompressor must be made to resist against a high fatigue operating cyclic fatigue stress.

In general, a reciprocating compressor cylinder comprises an assembly of stuffing box casings each including a sealing element, which casing assembly is usually called a "stuffing box pack". To improve the compressor fatigue performance, each stuffing box casing comprises, in turn, two concentric ring or disc elements, mutually assembled by an interference type of coupling, to provide a pre-compression status on the inner disc, which is subjected to a larger stress because of gas pressure fluctuations.

We have experimentally found that the stuffing box pack is usually the most critical component affecting a reliable operation of a hypercompressor cylinder. In fact, during a normal operation of this machine, the stuffing box casings, for example, may be differently broken because of erosion and wear phenomena affecting the coupling surfaces thereof, and because of fatigue - generated radial and circumferential crackings. Consequently, for each compressor breakage, the compressor must be stopped to perform required maintenance operations thereof, which, in turn, represents for the compressor user, an economic loss, deriving from expensive spare parts to be used and from a reduction of the system productivity.

At present, for improving the strength of the stuffing box casing assembly of a hypercompressor, usually made of weakly alloyed steel alloys, different methods are used. In particular, to reduce the wear phenomenon and increase the fatigue operating life of the stuffing box casings, the inner discs thereof must be processed by onto frettage, shot-peening and surface coating methods. However, because of the nature of the material the prior stuffing box casings are made of, and the typology of the loads applied to said stuffing box casings, the above mentioned fatigue breakage problems cannot be satisfactorily solved.

### SUMMARY OF THE INVENTION

Accordingly, the main object of the present invention is to provide a stuffing box casing for reciprocating compressors, in particular, though not exclusively, for hypercompressors for making polyethylene polymers and copolymers, allowing to improve the compressor stuffing box pack operating reliability and life with respect to prior compressors.

According to the present invention, the above object is achieved by a reciprocating compressor stuffing box as claimed in claim 1.

Further characteristics of the invention are disclosed in the dependent claims, which constitute an integrating part of this disclosure.

### BRIEF DESCRIPTION OF THE DRAWINGS

Further characteristics and advantages of a reciprocating compressor stuffing box casing according to the present invention will become more apparent hereinafter from the following description, given by a non limitative example, with reference to the accompanying schematic drawings, where:
Figure 1 is a partially cross-sectional view of a reciprocating hypercompressor cylinder in which one or more stuffing box casings according to the present invention may used;
Figure 2 is a cross-sectional view of a stuffing box pack of the reciprocating hypercompressor shown in figure 1; and
Figure 3 is a perspective view of a reciprocating compressor stuffing box casing according to the present invention.

### DESCRIPTION OF THE PREFERRED EMBODIMENT

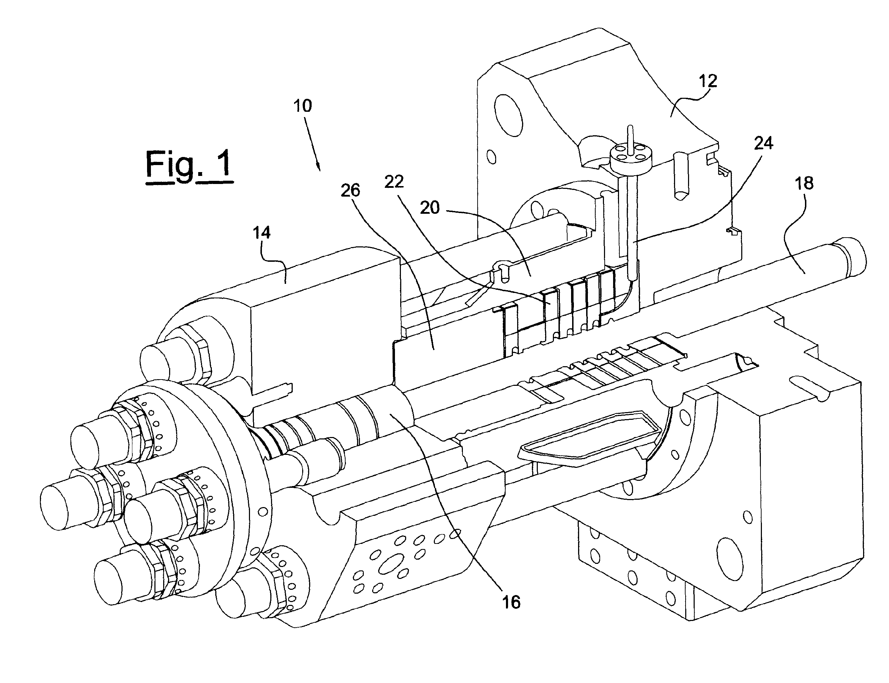

With reference to figure 1, it is herein schematically shown, by a partial cross sectional view, a cylinder 10 of a reciprocating compressor, in particular the cylinder of a second stage of a reciprocating hypercompressor used for making ethylene polymers and copolymers, such as, for example, low density polyethylene (LDPE) or an ethyl-vinyl-acetate (EVA) copolymer.

The cylinder 10 essentially comprises a flange 12, for coupling to a not shown compressor supporting framework and a head 14 housing the suction and delivery valves 16 for the gas to be compressed. This gas is compressed by a special piston 18 comprising a cylindric rod, the so-called "plunger", which is reciprocatedly driven in a stuffing box pack, and a spacer element 26 arranged between said head 14 and stuffing box pack.

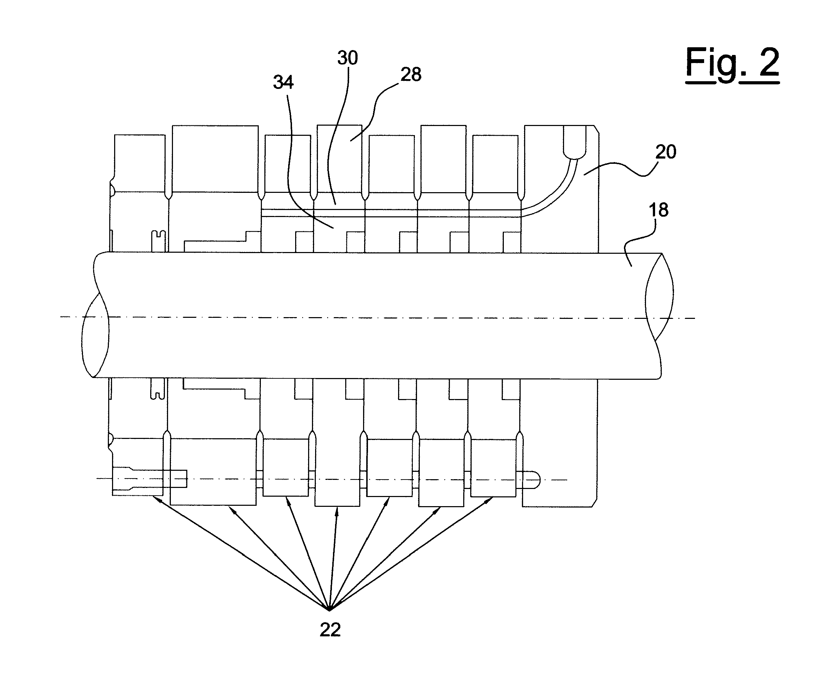

The stuffing box pack comprises a plurality of stuffing box casings 22 (figure 2). Outside of the stuffing box pack, a component 20, the so-called "sheath", for holding a cooling oil circulating on the outside the stuffing box casing 22 is provided.

In addition, a lubricating and cooling system supplies, through oil supplying ducts 24 (figure 1), a lubricating and cooling oil into the stuffing box casings 22, for reducing friction between sealing elements (which will be disclosed hereinafter) and the plunger 18, and removing heat generated by the plunger sliding movement.

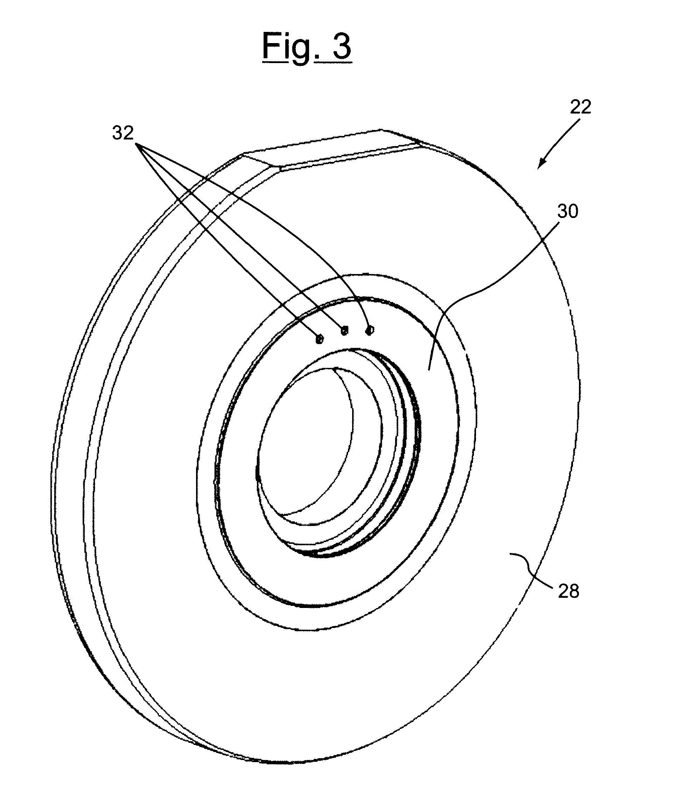

Each stuffing box casing 22 (figure 3) comprises two concentric discs, that is a first outer disc 28 and a second inner disc 30, therewithin a seat for a sealing element is formed. The two concentric discs 28 and 30 are assembled to one another by interference, thereby compressively loading the inner disc 30 under a normal operation condition of the compressor. To that end, through the inner disc 30 are accordingly formed one or more throughgoing axial holes 32, for supplying through lubricating ducts or candles 24 lubricating oil for lubricating said sealing elements.

According to the invention, at least the inner disc 30 of each stuffing box casing 22 is made of a high strength metal alloy material, adapted to provide said stuffing box casing 22 with very high reliability and fatigue and wear strength characteristics. More specifically, said metal alloy material, typically a steel alloy material, has the following chemical composition (the values being expressed in rates by weight based on the total weight of the material).

| **COMPONENT** | **% by weight** |
|---|---|
| Carbon [C] | 0.13% - 0.17% |
| Chrome [Cr] | 1.80% - 2.20% |
| Nickel [Ni] | 9.50% - 10.50% |
| Cobalt [Co] | 13.50% - 14.50% |
| Molybdenum [Mo] | 0.90% - 1.10% |
| Aluminium [Al] | 0.015% max |
| Titanium [Ti] | 0.015% max |
| Manganese [Mn] | 0.10% max |
| Silicon [Si] | 0.10% max |
| Sulphur [S] | 0.005% max |
| Phosphorus [P] | 0.008 max |

The material is made at first by a vacuum induction melting method (the so-called "vacuum induction melting" or VIM) and then a remelting method performed, in suitable arc ovens, that is a controlled atmosphere or vacuum voltaic arc melting method (the so-called "vacuum arc remelting" or VAR), thereby reducing to a minimum possibly present impurities while providing the thus processed alloy material with an improved breakage strength.

Finally, after having subjected the alloy material to a series of plastic deformation cycles for improving the mechanical characteristics thereof, said material is further processed by a thermal (hot) cyclic treatment performed in controlled atmosphere ovens, to maximize the alloy material hardness, toughness and strength characteristics.

It has been found that the stuffing box casings 22 according to the present invention, owing to the particular material they are made of and the metallurgic treatments they are subjected to, have a reliable factor of 40% larger than that of prior stuffing box casings, the use condition being the same.

It has been also found that the reciprocating compressor stuffing box casing according to the present invention achieves the above mentioned objects.

It should be apparent that the above disclosed inventive reciprocating compressor stuffing box casing is susceptible to several modifications and variations all coming within the same inventive idea and scope as defined in the accompanying claims.

## Claims

1. A stuffing box casing (22) for a reciprocating compressor cylinder (10), said stuffing box casing (22) comprising a first outer disc (28) and a second inner disc (30), said second inner disc (30) being concentric with respect to said first outer disc (28) and including therein a seat for at least a piston (18) sealing element, **characterized in that** at least one of said inner disc (30) or outer disc (28) is made of a high strength steel alloy material comprising the following alloying elements each in the indicated rate by weight based on a total weight of said steel alloy material:
- Carbon (0.13% ÷ 0.17%);
- Chrome (1.80% ÷ 2.20%);
- Nickel (9.50% ÷ 10.50%);
- Cobalt (13.50% ÷ 14.50%);
- Molybdenum (0.90% ÷ 1.10%).

2. A stuffing box casing (22) according to claim 1, **characterized in that** said high strength steel alloy material comprises moreover the following alloying elements each in the indicated rate by weight based on a total weight of said steel alloy material:
- Aluminium (0% ÷ 0.015%);
- Titanium (0% ÷ 0.015%);
- Manganese (0% ÷ 0.10%);
- Silicon (0% ÷ 0.10%);
- Sulphur (0% ÷ 0.005%);
- Phosphorus (0% ÷ 0.008%).

3. A stuffing box casing (22) according to claim 1 or 2, **characterized in that** said high strength steel alloy material is processed by a vacuum induction melting method and/or a controlled atmosphere or vacuum voltaic arc remelting method.

4. A stuffing box casing (22) according to claim 3, **characterized in that** said high strength steel alloy material is processed by plastic deformation cycles to improve the mechanic characteristics thereof.

5. A stuffing box casing (22) according to claim 3 or 4, **characterized in that** said high strength steel alloys material is processed by thermal processing cycles performed in controlled atmosphere ovens, to maximize the hardness, toughness and strength characteristics thereof.

6. A stuffing box casing (22) according to any preceding claims, **characterized in that** said two concentric discs (28, 30) are assembled by an interference coupling thereby compressively tensioning said inner disc (30).

7. A stuffing box casing (22) according to claim 6, **characterized in that** said inner disc (30) comprises one or more throughgoing axial holes (32) for a lubricating oil for lubricating said at least a sealing element.

8. A reciprocating compressor comprising one or more stuffing box casings (22) according to any preceding claims.
